# EUROPEAN PATENT SPECIFICATION

(11) **EP 2 949 980 B1**
(45) Date of publication and mention of the grant of the patent: **30.09.2020**
(21) Application number: 15165348.2
(22) Date of filing: 28.04.2015
(51) Int. Cl.: B23K 26/342, F16L 9/19, F16L 7/00, F16L 43/00, B21C 37/15

(54) **METHODS OF MANUFACTURING A FLUID DISTRIBUTION SYSTEM ASSEMBLY**
VERFAHREN ZUR HERSTELLUNG EINER FLÜSSIGKEITSVERTEILUNGSSYSTEMANORDNUNG
PROCÉDÉS DE FABRICATION D'UN ENSEMBLE DE SYSTÈME DE DISTRIBUTION DE FLUIDE

(30) Priority: 27.05.2014 US 201414287564
(43) Date of publication of application: 02.12.2015
(73) Proprietor: The Boeing Company, Chicago, IL 60606-1596 (US)
(72) Inventor: Regan, Casey Charles, Chicago, IL 60606-2016 (US)
(74) Representative: Boult Wade Tennant LLP

(56) References cited:
- DE-A1- 4 437 380
- US-A- 3 253 326
- US-A- 3 343 250
- US-A- 5 400 828

## Description

### BACKGROUND

The present invention relates generally to hydraulic systems and, more particularly, to methods of manufacturing a fluid distribution system assembly.

Known aircraft hydraulic systems use a pressurized supply line to transport hydraulic fluid to a load, and a separate return line for returning the hydraulic fluid from the load back to a storage tank or reservoir. Known pressurized supply lines and return lines are fabricated with a wall thickness that is sufficient to withstand pressure differentials that may exist within the hydraulic system. Separate pressure and return lines may require extra space and hardware. In an aircraft, space is limited, and the additional hardware increases weight, part cost, and installation time. Additionally, pressure lines are generally unprotected and thus, may be susceptible to damage during handling and installation and may be thicker and heavier than necessary.

According to its abstract, US 5 400 828 A describes a centering support for a double-containment piping assembly that has a body portion including an inner surface defining a central aperture for receiving and supporting the inner pipe within the outer pipe, and the inner surface is defined by a first radius of curvature. A plurality of support lugs are spaced apart from each other and project outward from the body portion, and each support lug defines an outer support surface for contacting the outer pipe. The support lugs also define corresponding recessed surfaces extending between adjacent support lugs, and each recessed surface is defined by a second radius of curvature substantially concentric with the first radius of curvature.

### BRIEF SUMMARY

The present invention is a method of manufacturing a fluid distribution system, the method comprising (a) providing a first distribution line configured to channel a fluid in a first direction, (b) providing at least one internal support member including a base portion and a plurality of support legs extending radially outward from the base portion, wherein the base portion has a circular shape and is sized to slide onto an outer surface of the first distribution line, wherein the at least one internal support member includes a brazing material disposed on an inner surface of the base portion, and wherein an outer surface of each support leg of the plurality of support legs of the at least one internal support member includes a brazing material disposed thereon, (c) heating the at least one internal support member to braze the at least one internal support member to the first distribution line so as to couple the at least one internal support member to the outer surface of the first distribution line, (d) aligning a second distribution line concentrically with and circumscribing the first distribution line, the second distribution line configured to channel the fluid in an opposite second direction, and (e) heating the second distribution line to braze the plurality of support legs to the second distribution line so as to couple the plurality of support legs to the inner surface of the second distribution line.

The present invention is also a fluid distribution system assembly comprising a first distribution line configured to channel a fluid in a first direction. The fluid distribution system assembly further comprises at least one internal support member brazed to an outer surface of the first distribution line using a brazing material disposed on an inner surface of a base portion of the at least one internal support member, the at least one internal support member further comprising a plurality of support legs extending radially outward from the base portion, wherein the base portion has a circular shape and is sized to slide onto an outer surface of the first distribution line. The fluid distribution system assembly further comprises a second distribution line comprising an inner surface brazed to the plurality of support legs using a brazing material disposed on an outer surface of each support leg of the plurality of support legs of the at least one internal support member, the second distribution line concentrically aligned with and circumscribing the first distribution line, the second distribution line configured to channel the fluid in an opposite second direction, wherein the second distribution line is aligned after the at least one internal support member is coupled to the first distribution line.

### BRIEF DESCRIPTION OF THE DRAWINGS

Fig. 1 is a block diagram of an exemplary hydraulic system that may be used in an aircraft.
Fig. 2 is a perspective view of an exemplary fluid distribution system that may be used in the aircraft hydraulic system shown in Fig. 1.
Fig. 3 is an enlarged perspective view of the fluid distribution system shown in Fig. 2.
Fig. 4 is a perspective view of the fluid distribution system shown in Fig. 2 and coupled within the hydraulic system shown in Fig. 1.
Fig. 5 is an enlarged view showing connections of the fluid distribution system to the aircraft hydraulic system shown in Fig. 4.
Fig. 6 is a perspective view of an alternative fluid distribution system shown in Fig. 2 and coupled within the hydraulic system shown in Fig. 1.
Fig. 7 is a flow diagram of an exemplary aircraft production and service methodology.
Fig. 8 is a block diagram of an exemplary aircraft that may be fabricated using the system shown in Fig. 1.

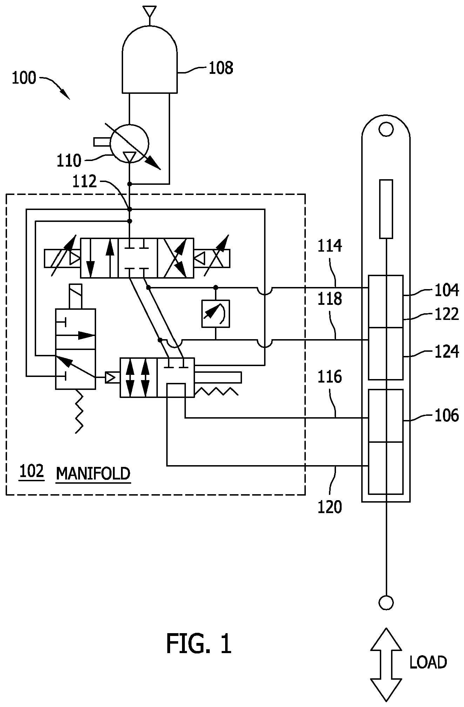

   Figures 1 to 8 are only useful for understanding the context of the invention.

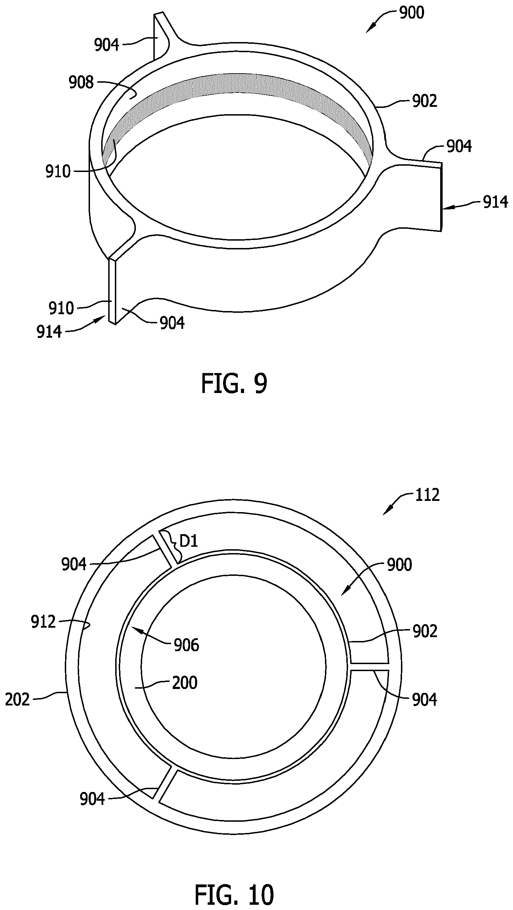

Fig. 9 is a perspective view of an exemplary internal support member that may be used with the fluid distribution system according to the invention.
Fig. 10 is a cross-sectional view of the internal support member shown in Fig. 9 installed within the fluid distribution system according to the invention.

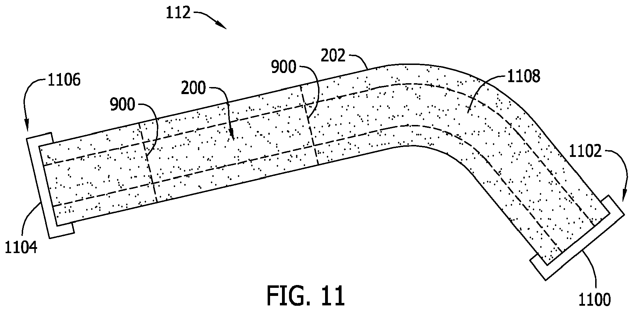

Fig. 11 is a side view of the fluid distribution system according to the inventior formed into a desired configuration.

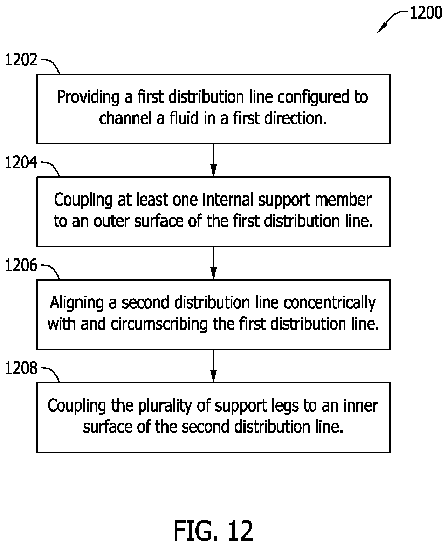

Fig. 12 is a flowchart of an exemplary method of manufacturing the fluid distribution system, according to the invention.

### DETAILED DESCRIPTION

Fig. 1 is a block diagram of an exemplary hydraulic system 100 that may be used in an aircraft. Hydraulic system 100 includes a manifold 102, a first actuator 104, and a second actuator 106. Manifold 102 is in flow communication to a pressure source (not shown) that includes a fluid reservoir 108 and a pump 110 that supply manifold 102 with a pressurized working fluid via a fluid distribution system 112. Pump 110 may include any type of pump, such as, but not limited to, hydraulic pumps, engine driven pumps, electrically driven pumps, air or wind driven pumps, and/or ram air turbine (RAT) pumps. The working fluid is returned back to fluid reservoir 108 at the reservoir pressure via fluid distribution system 112. From the reservoir 108, the working fluid is then re-supplied to pump 110 via fluid distribution system 112. Accordingly, hydraulic system 100 constitutes a closed fluid system.

First and second actuators 104 and 106, respectively, may include any actuators used in known hydraulic systems. Each actuator 104 and 106, respectively, includes a piston (not shown) movable within an actuator barrel (not shown). Each actuator 104 and 106, respectively, also includes a shaft or rod (not shown). One end of the shaft engages the piston, while the other end of the shaft engages with the flight control surface. The actuator barrel is in flow communication to fluid reservoir 108 and to pump 110 via an extended fluid conduit 114 or 116 and a retracted fluid conduit 118 or 120. Each actuator barrel is sized to enable the piston to move within the barrel when the barrel receives a supply of pressurized working fluid from reservoir 108 and pump 110 via fluid distribution system 112.

Each actuator 104 and 106 is in flow communication to manifold 102 via a respective extended fluid conduit or line 114 or 116, respectively, and via a retracted fluid conduit 118 or 120. When provided with pressurized working fluid, the flow direction of the pressurized working fluid determines whether actuators 104 and 106 extend or retract, and thus operate to retract or extend the flight control surface. For example, first actuator's 104 piston extends when the pressurized working fluid enters an extend side 122 of first actuator 104 via extended fluid conduit 114. Working fluid is discharged from a retract side 124 of first actuator 104 via retracted fluid conduit 118 and is returned to reservoir 108 via fluid distribution system 112. Conversely, first actuator's 104 piston retracts when the pressurized working fluid is provided to retract side 124 via retracted fluid conduit 118. In such a condition, the working fluid is discharged from extend side 122 of first actuator 104 via extended fluid conduit 114 and returned to reservoir 108 via fluid distribution system 112.

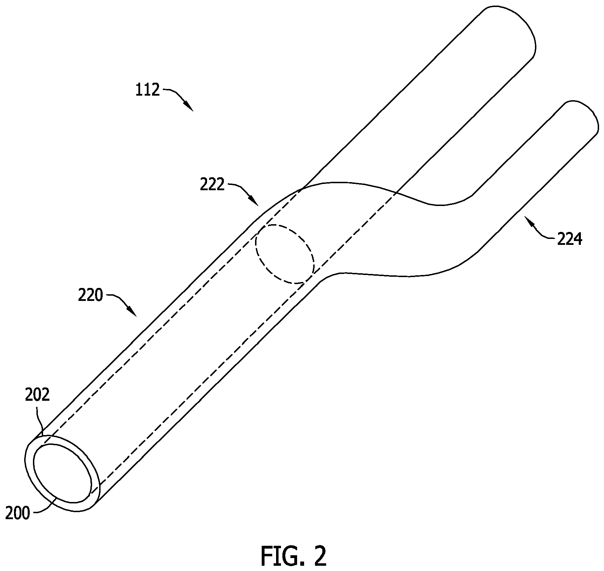

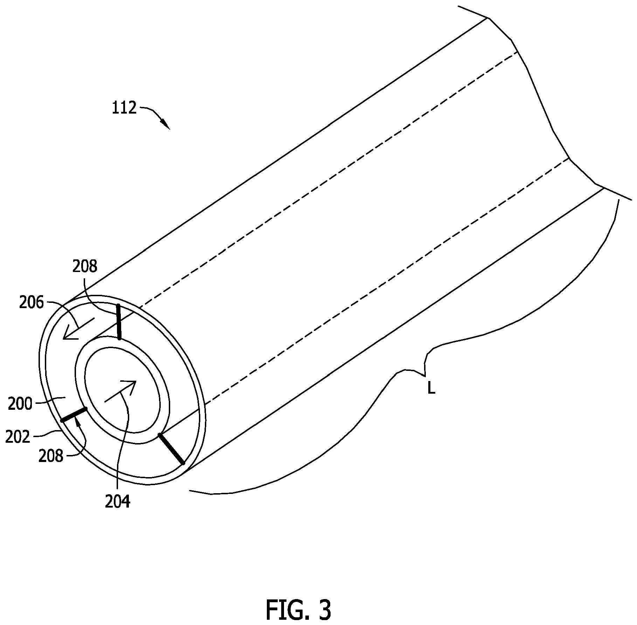

Fig. 2 is a perspective view of a fluid distribution system 112, and FIG. 3 is an enlarged perspective view of fluid distribution system 112 that may be used in aircraft hydraulic system 100 (shown in Fig. 1). The fluid distribution system 112 includes a first, inner line 200 and a second, outer line 202. Outer line 202 includes a first portion 220, a second portion 224, and an interface portion 222 located therebetween. Inner line 200 extends in a substantially linear direction and is sized for insertion into outer line 202 at interface region 222. More specifically, inner line 200 is insertable into outer line 202 with an interference fit at interface region 222, and is substantially concentric with first portion 220. Second portion 224 then extends transversely from interface region 222 to couple in flow communication with fluid reservoir 108 (shown in Fig. 1).

Inner line 200 is concentrically positioned within outer line 202 along a full length L of fluid distribution system 112. More specifically, outer line 202 is radially outward from inner line 200. Fluid distribution system 112 is configured to channel a fluid in a first direction 204 via inner line 200 and channel fluid in a second direction 206 that is opposite first direction 204 via outer line 202.

Inner line 200 is a pressure supply line 200 that delivers pressurized working fluid to manifold 102 (shown in Fig. 1). Further, in the exemplary implementation, outer line 202 is a return line 202 that returns the working fluid to fluid reservoir 108 (shown in Fig. 1). Because return line 202 circumferentially surrounds pressure supply line 200, at least a portion of hoop stresses induced to pressure supply line 200 are reduced, thus enabling pressure supply line 200 to be fabricated with a thinner wall thickness than other known pressure supply lines. In some implementations, one or more internal support members 208 extend between pressure supply line 200 and return line 202 to provide enhanced structural support and to facilitate preventing bending and/or disfigurement of fluid distribution system 112. In an alternative implementation, return line 202 may be concentrically positioned within pressure supply line 200.

Fluid distribution system 112 is fabricated using an additive manufacturing process. Specifically, an additive manufacturing process known as direct metal laser sintering (DMLS) or direct metal laser melting (DMLM) is used to manufacture fluid distribution system 112. Although the fabrication process is described herein as DMLS, one having ordinary skill in the art would understand that DMLM could also be used. Alternatively, the additive manufacturing method is not limited to the DMLS or DMLM process, but may be any known additive manufacturing process that enables fluid distribution system 112 to function as described herein. This fabrication process eliminates complex joints and structures that would typically be defined between separate components that require welding or brazing. Rather, DMLS is an additive layer process that produces a metal component directly from a CAD model using a laser and a fine metal powder. The result is a monolithic distribution system having concentric first and second distribution lines connected by support members. The distribution system may further include ducts that extend from the first and second distribution lines that are configured to couple with separate fluid sources. In a further implementation, the ducts may also be manufactured in-situ with the distribution system using a DMLS, DMLM, or other additive manufacturing process to form a monolithic distribution system. Aluminium-based alloy powders, corrosion resistant steel-based alloy powders, titanium-based alloy powders, and synthetic rubber compound powders are used to fabricate the fluid distribution line disclosed herein, but other powders that enable the fluid distribution line to function as described herein may be used.

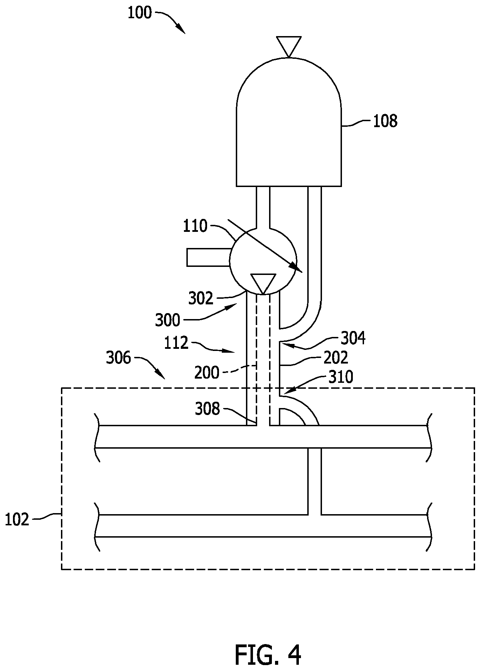

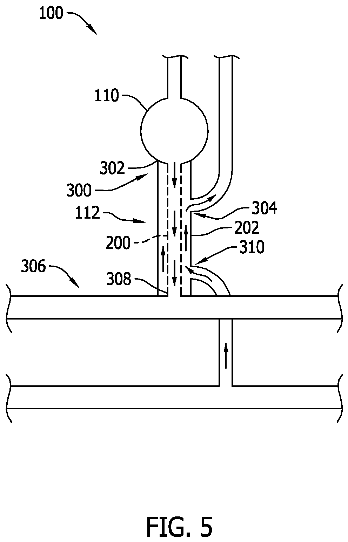

Fig. 4 is a perspective view of a fluid distribution system 112 (shown in Fig. 2) that is coupled within hydraulic system 100 (shown in Fig. 1). Fig. 5 is an enlarged view showing connection of fluid distribution system 112 to aircraft hydraulic system 100. In this figure, at a first end 300, pressure supply line 200 is in flow communication to pump 110 (shown in Fig. 1). Return line 202 extends about pressure supply line 200 and is coupled to an end plate 302 of pump 110. Return line 202 includes an outlet 304 that is coupled in flow communication to reservoir 108 to channel fluid returning from manifold 102 back into reservoir 108.

At a second end 306, pressure supply line 200 is coupled in flow communication to an inlet 308 of manifold 102 to enable fluid flow of pressurized fluid from pump 110 into manifold 102. Further, fluid distribution system 112 includes a return line inlet 310 that channels fluid flowing from manifold 102 back towards reservoir 108. In alternative implementations, fluid distribution system 112 may be coupled within system 100 using a separate connection device than the device that couples fluid distribution system 112 to system 100.

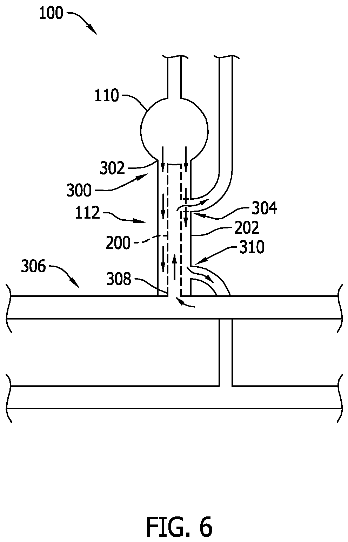

Fig. 6 is a perspective view of an alternative fluid distribution system shown in Fig. 2 and coupled within the hydraulic system shown in Fig. 1. The distribution system may include ducts that extend from the first and second distribution lines that are configured to connect with separate fluid sources. The system may be structured such that a duct that is coupled in flow communication with the first distribution line extends through a wall of the second distribution line to couple in flow communication with fluid reservoir 108 (shown in Fig. 1). Further, the wall of the second distribution line and the duct may be manufactured in-situ with the distribution system using a DMLS, DMLM, or other additive manufacturing process to form a monolithic distribution system.

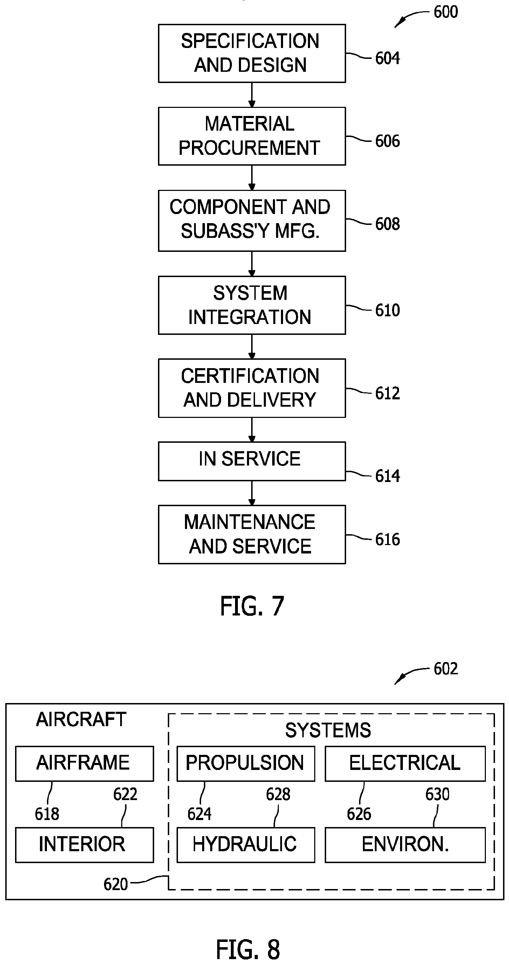

The methods and systems described herein are in the context of aircraft manufacturing and service method 600 (shown in Fig. 7) and an aircraft 602 (shown in Fig. 8). Alternatively, the methods and systems described herein may be implemented in any context and/or in any environment involving a fluid distribution system. During pre-production, method 600 may utilize specification and design 604 of the aircraft 602 and/or material procurement 606. During production, component and subassembly manufacturing 608 and system integration 610 of the aircraft 602 occurs. Thereafter, aircraft 602 may go through certification and delivery 612 prior to being placed in service 614. While in service by a customer, aircraft 602 is scheduled for routine maintenance and service 616 (including, for example, modification, reconfiguration, and/or refurbishment).

Each of the processes of method 600 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in Fig. 8, an aircraft 602 produced using method 600 may include an airframe 618 having a plurality of systems 620 and an interior 622. Examples of high-level systems 620 may include one or more of a propulsion system 624, an electrical system 626, a hydraulic system 626, and/or an environmental system 630. Any number of other systems may be included. Although an aerospace example is shown, the principles of the invention may be applied to other industries, such as the automotive industry, machinery, and heavy equipment.

Fig. 9 is a perspective view of an exemplary internal support member 900 that may be used within the invention and with fluid distribution system 112 (shown in Figs. 1-3). Fig. 10 is a cross-sectional view of internal support member 900 installed within fluid distribution system 112 according to the invention. . Internal support member 900 may be used in place of internal support member 208 (shown in Fig. 3). The internal support member 900 includes a base portion 902 and a plurality of support legs 904 extending from base portion 902.

According to the invention, in this embodiment base portion 902 has a circular shape and is sized to slide onto an outer surface 906 of inner line 200 (shown in Figs. 2 and 3). An inner surface 908 of base portion 902 includes a brazing material 910 disposed thereon. When internal support member 900 is positioned at a desired location on inner line 200, base portion 902 is heated to braze internal support member 900 to inner line 200. In some implementations, a plurality of internal support members 900 are coupled to outer surface 906 of inner line 200 at predetermined distances along inner line 200.

According to the invention, in this embodiment support legs 904 extend radially outward from base portion 902. Although Figs. 9 and 10 show internal support member 900 having three support legs 904, internal support member 900 may include any number of support legs 904 that enables fluid distribution system 112 to function as described herein. Support legs 904 extend outward a distance D1 such that they contact an inner surface 912 of outer line 202 (shown in Figs. 2 and 3) when outer line 202 is aligned concentrically with and circumscribing inner line 200. An outer surface 914 of each support leg 904 includes brazing material 910 disposed thereon. When outer line 202 is positioned at a desired location about inner line 200, outer line 202 is heated to braze support legs 904 to outer line 202. More specifically, in the exemplary implementation, outer line 202 is heated at predetermined locations at which support legs 904 contact outer line 202.

Fig. 11 is a side view of an exemplary fluid distribution system 112 (shown in Figs. 1-3 and 10) formed into a desired configuration. In the exemplary implementation, fluid distribution system 112 includes a first plug 1100 at a first end 1102 and a second plug 1104 at a second end 1106 of inner and outer lines 200 and 202 (shown in Figs. 2, 3, and 10). Fluid distribution system 112 also includes a filling material 1108 disposed in inner and outer lines 200 and 202. Filling material 1108 includes sand or any other filling material that enables fluid distribution system 112 to function as described herein.

In the exemplary implementation, to form fluid distribution system 112 into a desired configuration, first plug 1100 is inserted in inner and outer lines 200 and 202 at first end 1102. Filling material 1108 is inserted into inner and outer lines 200 and 202 at second end 1106 and is packed tightly. Once full, second plug 1104 is inserted at second end 1106. Fluid distribution system 112 is formed or bent into a desired configuration. Filling material 1108 provides internal support for inner and outer lines 200 and 202 and prevent them from wrinkling or deforming during bending. After the desired configuration is achieved, plugs 1100 and 1104 and filling material 1108 are removed from inner and outer lines 200 and 202.

Fig. 12 is a flowchart 1200 of an exemplary method of manufacturing fluid distribution system 112 (shown in Figs. 2, 3, 10, and 11). according to the invention.

The method includes providing 1202 a first distribution line configured to channel a fluid in a first direction. At least one internal support member is coupled 1204 to an outer surface of the first distribution line. The at least one internal support member includes a plurality of support legs extending radially outward therefrom. The at least one internal support member includes a brazing material disposed on an inner surface of the at least one internal support member. The at least one internal support member is coupled to an outer surface of the first distribution line by heating the at least one internal support member to braze the at least one internal support member to the first distribution line. In one implementation, a plurality of internal support members are coupled to the outer surface of the first distribution line at predetermined distances along the first distribution line.

The method includes aligning 1206 a second distribution line concentrically with and circumscribing the first distribution line. The second distribution line is configured to channel the fluid in an opposite second direction.

The method includes coupling 1208 the plurality of support legs to an inner surface of the second distribution line. An outer surface of each support leg of the plurality of support legs includes a brazing material disposed thereon. The plurality of support legs are coupled to the inner surface of the second distribution line by heating the second distribution line to braze the plurality of support legs to the second distribution line. Heating the second distribution line to braze the plurality of support legs to the second distribution line may include heating the second distribution line at predetermined locations where the plurality of support legs contact the inner surface of the second distribution line.

In an exemplary implementation, the method further includes filling the first and second distribution lines with a filling material. The filling material may include sand. To fill the first and second distribution lines, a first end of the first and second distribution lines is plugged before filling the first and second distribution lines with the filling material. After filling the first and second distribution lines with the filling material, a second end of the first and second distribution lines is plugged. After the first and second distribution lines are filled with the filling material and plugged at the first and second ends, the first and second distribution lines are formed into a desired configuration. When the desired configuration is achieved, the filling material is removed from the first and second distribution lines.

Apparatus and methods implemented herein may be employed during any one or more of the stages of the production and service method 600. For example, components or subassemblies corresponding to production process 608 may be fabricated or manufactured in a manner similar to components or subassemblies produced while the aircraft 602 is in service. Also, one or more apparatus implementations, method implementations, or a combination thereof may be utilized during the production stages 608 and 610, for example, by substantially expediting assembly of or reducing the cost of an aircraft 602. Similarly, one or more of apparatus implementations, method implementations, or a combination thereof may be utilized while the aircraft 602 is in service, for example and without limitation, to maintenance and service 616.

The implementations described herein facilitate reducing the size and space required for installation of fluid distribution lines in an aircraft. More specifically, the above-described systems integrate a pressure supply line within a return line, rather than having separate lines that require more space. The return line reduces stresses on and protects the pressure supply line during installation and operation, enabling a reduction in thickness of the pressure supply line. Further, the above-described fluid distribution line reduces weight, installation time, and costs.

A technical effect of the systems and methods described herein includes at least one of: (a) providing a first distribution line configured to channel a fluid in a first direction; (b) coupling at least one internal support member to an outer surface of the first distribution line, wherein the at least one internal support member includes a plurality of support legs extending radially outward therefrom; (c) aligning a second distribution line concentrically with and circumscribing the first distribution line, the second distribution line configured to channel the fluid in an opposite second direction; and (d) coupling the plurality of support legs to an inner surface of the second distribution line.

The implementations described herein relate generally to hydraulic systems and, more particularly, to methods and systems for channeling a fluid using aircraft hydraulic fluid distribution lines. Exemplary implementations of methods and systems for channeling a fluid using aircraft hydraulic fluid distribution lines are described above in detail. The methods and systems are not limited to the specific implementations described herein, but only by the claims.

This written description uses examples to disclose the invention including the best mode, and also to enable any person skilled in the art to practice the implementations, including making and using any devices or systems and performing any incorporated methods. The invention is defined by the claims, and may include further other examples that occur to those skilled in the art.

## Claims

1. A method of manufacturing a fluid distribution system (112), said method comprising:
providing a first distribution line (200) configured to channel a fluid in a first direction (204);
providing at least one internal support member (900) including a base portion (902) and a plurality of support legs (904) extending radially outward from the base portion, wherein the base portion has a circular shape and is sized to slide onto an outer surface (906) of the first distribution line, wherein the at least one internal support member includes a brazing material disposed on an inner surface (908) of the base portion, and wherein an outer surface of each support leg of the plurality of support legs of the at least one internal support member includes a brazing material (910) disposed thereon;
heating the at least one internal support member to braze the at least one internal support member to the first distribution line so as to couple the at least one internal support member to the outer surface of the first distribution line;
aligning a second distribution line (202) concentrically with and circumscribing the first distribution line, the second distribution line configured to channel the fluid in an opposite second direction (206); and
heating the second distribution line to braze the plurality of support legs to the second distribution line so as to couple the plurality of support legs to the inner surface of the second distribution line.

2. A method in accordance with Claim 1, further comprising:
filling the first and second distribution lines with a filling material (1108); and
forming the first and second distribution lines into a desired configuration.

3. A method in accordance with Claim 2, further comprising plugging a first end of the first and second distribution lines before filling the first and second distribution lines with the filling material.

4. A method in accordance with Claim 2 or 3, further comprising plugging a second end of the first and second distribution lines after filling the first and second distribution lines with the filling material.

5. A method in accordance with any of Claims 2-4, wherein filling the first and second distribution lines with a filling material comprises filling the first and second distribution lines with sand.

6. A method in accordance with any of Claims 2-5, further comprising removing the filling material from the first and second distribution lines.

7. A method in accordance with any preceding claim, wherein coupling at least one internal support member to the outer surface of the first distribution line comprises coupling a plurality of internal support members to the outer surface of the first distribution line, the plurality of internal support members spaced at predetermined distances along the first distribution line.

8. A method in accordance with Claim 1, wherein heating the second distribution line to braze the plurality of support legs to the second distribution line comprises heating the second distribution line at predetermined locations where the plurality of support legs contact the inner surface of the second distribution line.

9. A fluid distribution system assembly (112) comprising:
a first distribution line (200) configured to channel a fluid in a first direction (204);
at least one internal support member (900) brazed to an outer surface of the first distribution line using a brazing material disposed on an inner surface (908) of a base portion (902) of the at least one internal support member, the at least one internal support member further comprising a plurality of support legs (904) extending radially outward from the base portion, wherein the base portion has a circular shape and is sized to slide prior to brazing onto an outer surface (906) of the first distribution line; and
a second distribution line (202) comprising an inner surface brazed to the plurality of support legs using a brazing material (910) disposed on an outer surface of each support leg of the plurality of support legs of the at least one internal support member, the second distribution line concentrically aligned with and circumscribing the first distribution line, the second distribution line configured to channel the fluid in an opposite second direction (206), wherein the second distribution line is aligned after the at least one internal support member is coupled to the first distribution line.

10. A fluid distribution system assembly in accordance with Claim 9, further comprising a plurality of internal support members coupled to the outer surface of the first distribution line, the plurality of internal support members spaced at predetermined distances along the first distribution line.

## Patentansprüche

1. Verfahren zur Herstellung eines Fluidverteilungssystems (112), wobei das Verfahren umfasst:
Bereitstellen einer ersten Verteilungsleitung (200), die konfiguriert ist, um ein Fluid in eine erste Richtung (204) zu leiten;
Bereitstellen mindestens eines internen Trägerelements (900) mit einem Basisabschnitt (902) und einer Mehrzahl von Trägerschenkeln (904), die sich von dem Basisabschnitt radial nach außen erstrecken,
wobei der Basisabschnitt eine kreisrunde Form hat und bemessen ist, um auf einer Außenfläche (906) der ersten Verteilungsleitung zu gleiten, wobei das mindestens eine interne Trägerelement ein Hartlötmaterial aufweist, das an einer Innenfläche (908) des Basisabschnitts angeordnet ist, und wobei eine Außenfläche jedes Trägerschenkels der Mehrzahl von Trägerschenkeln des mindestens einen internen Trägerelements ein darauf angeordnetes Hartlötmaterial (910) aufweist;
Erwärmen des mindestens einen internen Trägerelements, um das mindestens eine interne Trägerelement an die erste Verteilungsleitung zu löten, um so das mindestens eine interne Trägerelement mit der Außenfläche der ersten Verteilungsleitung zu koppeln;
Ausrichten einer zweiten Verteilungsleitung (202) konzentrisch mit der ersten Verteilungsleitung und diese umschreibend, wobei die zweite Verteilungsleitung konfiguriert ist, um das Fluid in einer entgegengesetzten zweiten Richtung (206) zu leiten; und
Erwärmen der zweiten Verteilungsleitung, um die Mehrzahl von Trägerschenkeln an die zweite Verteilungsleitung zu löten, um die Mehrzahl von Trägerschenkeln an die Innenfläche der zweiten Verteilungsleitung zu koppeln.

2. Verfahren nach Anspruch 1, das ferner umfasst:
Füllen der ersten und zweiten Verteilungsleitung mit einem Füllmaterial (1108); und
Formen der ersten und zweiten Verteilungsleitung in eine gewünschte Konfiguration.

3. Verfahren nach Anspruch 2, das ferner das Verstopfen eines ersten Endes der ersten und der zweiten Verteilungsleitung vor dem Füllen der ersten und der zweiten Verteilungsleitung mit dem Füllmaterial umfasst.

4. Verfahren nach Anspruch 2 oder 3, das ferner das Verstopfen eines zweiten Endes der ersten und der zweiten Verteilungsleitung nach dem Füllen der ersten und der zweiten Verteilungsleitung mit dem Füllmaterial umfasst.

5. Verfahren nach einem der Ansprüche 2-4, bei dem das Füllen der ersten und der zweiten Verteilungsleitung mit einem Füllmaterial das Füllen der ersten und der zweiten Verteilungsleitung mit Sand umfasst.

6. Verfahren nach einem der Ansprüche 2-5, bei dem das Verfahren ferner das Entfernen des Füllmaterials aus der ersten und zweiten Verteilungsleitung umfasst.

7. Verfahren nach einem der vorhergehenden Ansprüche, bei dem das Koppeln mindestens eines internen Trägerelements an die Außenfläche der ersten Verteilungsleitung das Koppeln einer Mehrzahl von inneren Trägerelementen an die Außenfläche der ersten Verteilungsleitung umfasst, wobei die Mehrzahl von internen Trägerelementen in vorgegebenen Abständen entlang der ersten Verteilungsleitung angeordnet ist.

8. Verfahren nach Anspruch 1, bei dem das Erwärmen der zweiten Verteilungsleitung zum Anlöten der Mehrzahl von Trägerschenkeln an die zweite Verteilungsleitung das Erwärmen der zweiten Verteilungsleitung an vorgegebenen Stellen umfasst, an denen die Mehrzahl von Trägerschenkeln die Innenfläche der zweiten Verteilungsleitung berührt.

9. Fluidverteilungssystem-Baugruppe (112), umfassend:
eine erste Verteilungsleitung (200), die konfiguriert ist, um ein Fluid in eine erste Richtung (204) zu leiten;
mindestens ein internes Trägerelement (900), das unter Verwendung eines Hartlötmaterials, das auf einer Innenfläche (908) eines Basisabschnitts (902) des mindestens einen internen Trägerelements angeordnet ist, an eine Außenfläche der ersten Verteilungsleitung hartgelötet ist, wobei das mindestens eine interne Trägerelement ferner eine Mehrzahl von Trägerschenkeln (904) umfasst, die sich von dem Basisabschnitt radial nach außen erstrecken, wobei der Basisabschnitt eine kreisrunde Form hat und bemessen ist, um vor dem Hartlöten auf einer Außenfläche (906) der ersten Verteilungsleitung zu gleiten; und
eine zweite Verteilungsleitung (202), die eine innere Oberfläche umfasst, die an die Mehrzahl von Trägerschenkeln unter Verwendung eines Hartlötmaterials (910) angelötet ist, das auf einer äußeren Oberfläche jedes Trägerschenkels der Mehrzahl von Trägerschenkeln des mindestens einen internen Trägerelements angeordnet ist, wobei die zweite Verteilungsleitung konzentrisch mit der ersten Verteilungsleitung ausgerichtet ist und diese umschreibt, wobei die zweite Verteilungsleitung konfiguriert ist, um das Fluid in einer entgegengesetzten zweiten Richtung (206) zu leiten, wobei die zweite Verteilungsleitung ausgerichtet ist, nachdem das mindestens eine interne Trägerelement mit der ersten Verteilungsleitung gekoppelt ist.

10. Fluidverteilungssystem-Baugruppe nach Anspruch 9, ferner umfassend eine Mehrzahl von internen Trägerelementen, die mit der Außenfläche der ersten Verteilungsleitung verbunden sind, wobei die Mehrzahl von internen Trägerelementen in vorgegebenen Abständen entlang der ersten Verteilungsleitung angeordnet sind.

## Revendications

1. Procédé de fabrication d'un système de distribution de fluide (112), ledit procédé comprenant les étapes consistant à :
fournir une première ligne de distribution (200) configurée pour acheminer un fluide dans une première direction (204) ;
fournir au moins un élément de support interne (900) comprenant une partie de base (902) et une pluralité de jambes de support (904) s'étendant radialement vers l'extérieur à partir de la partie de base, dans lequel la partie de base a une forme circulaire et est dimensionnée pour glisser sur une surface extérieure (906) de la première ligne de distribution, dans lequel le au moins un élément de support interne comprend un matériau de brasage disposé sur une surface intérieure (908) de la partie de base, et dans lequel une surface extérieure de chaque jambe de support de la pluralité de jambes de support du au moins un élément de support interne comprend un matériau de brasage (910) disposé dessus ;
chauffer le au moins un élément de support interne pour braser le au moins un élément de support interne sur la première ligne de distribution de manière à coupler le au moins un élément de support interne à la surface extérieure de la première ligne de distribution ;
aligner une seconde ligne de distribution (202) de manière concentrique avec la première ligne de distribution, et entourant celle-ci, la seconde ligne de distribution étant configurée pour acheminer le fluide dans une seconde direction opposée (206) ; et
chauffer la seconde ligne de distribution pour braser la pluralité de jambes de support sur la seconde ligne de distribution de manière à coupler la pluralité de jambes de support à la surface intérieure de la seconde ligne de distribution.

2. Procédé selon la revendication 1, comprenant en outre :
le remplissage des première et seconde lignes de distribution avec un matériau de remplissage (1108) ; et
la formation des première et seconde lignes de distribution en une configuration souhaitée.

3. Procédé selon la revendication 2, comprenant en outre l'obturation d'une première extrémité des première et seconde lignes de distribution avant de remplir les première et seconde lignes de distribution avec le matériau de remplissage.

4. Procédé selon la revendication 2 ou 3, comprenant en outre l'obturation d'une seconde extrémité des première et seconde lignes de distribution après avoir rempli les première et seconde lignes de distribution avec le matériau de remplissage.

5. Procédé selon l'une quelconque des revendications 2 à 4, dans lequel le remplissage des première et seconde lignes de distribution avec un matériau de remplissage comprend le remplissage des première et seconde lignes de distribution avec du sable.

6. Procédé selon l'une quelconque des revendications 2 à 5, comprenant en outre le retrait du matériau de remplissage à partir des première et seconde lignes de distribution.

7. Procédé selon l'une quelconque des revendications précédentes, dans lequel le couplage d'au moins un élément de support interne à la surface extérieure de la première ligne de distribution comprend le couplage d'une pluralité d'éléments de support internes à la surface extérieure de la première ligne de distribution, la pluralité d'éléments de support internes étant espacés à des distances prédéterminées le long de la première ligne de distribution.

8. Procédé selon la revendication 1, dans lequel le chauffage de la seconde ligne de distribution pour braser la pluralité de jambes de support sur la seconde ligne de distribution comprend le chauffage de la seconde ligne de distribution à des emplacements prédéterminés où la pluralité de jambes de support est en contact avec la surface intérieure de la seconde ligne de distribution.

9. Ensemble de système de distribution de fluide (112) comprenant :
une première ligne de distribution (200) configurée pour acheminer un fluide dans une première direction (204) ;
au moins un élément de support interne (900) brasé sur une surface extérieure de la première ligne de distribution en utilisant un matériau de brasage disposé sur une surface intérieure (908) d'une partie de base (902) du au moins un élément de support interne, le au moins un élément de support interne comprenant en outre une pluralité de jambes de support (904) s'étendant radialement vers l'extérieur depuis la partie de base, dans lequel la partie de base a une forme circulaire et est dimensionnée pour glisser avant le brasage sur une surface extérieure (906) de la première ligne de distribution ; et
une seconde ligne de distribution (202) comprenant une surface intérieure brasée sur la pluralité de jambes de support en utilisant un matériau de brasage (910) disposé sur une surface extérieure de chaque jambe de support de la pluralité de jambes de support du au moins un élément de support interne, la seconde ligne de distribution étant alignée de manière concentrique avec la première ligne de distribution, et entourant celle-ci, la seconde ligne de distribution étant configurée pour acheminer le fluide dans une seconde direction opposée (206), dans lequel la seconde ligne de distribution est alignée après que le au moins un élément de support interne est couplé à la première ligne de distribution.

10. Ensemble de système de distribution de fluide selon la revendication 9, comprenant en outre une pluralité d'éléments de support internes couplés à la surface extérieure de la première ligne de distribution, la pluralité d'éléments de support internes étant espacés à des distances prédéterminées le long de la première ligne de distribution.
